# FASCICULE DE BREVET EUROPEEN

(11) **EP 2 088 358 B1**
(45) Date de publication et mention de la délivrance du brevet: **13.04.2016**
(21) Numéro de dépôt: 09152021.3
(22) Date de dépôt: 04.02.2009
(51) Int. Cl.: F16L 37/40, F16L 37/084, F16L 37/086, F16L 37/42

(54) **Elément femelle de raccord et raccord rapide incorporant un tel élément**
Verbindungssteckerelement und Schnellverbindung, die ein solches Element beinhaltet
Female connection element and quick connection including such an element

(30) Priorité: 06.02.2008 FR 0850757
(43) Date de publication de la demande: 12.08.2009
(73) Titulaire: Staubli Faverges, 74210 Faverges (FR)
(72) Inventeur: Tiberghien, Alain - Christophe, 74320 Sevrier (FR); Chambaud, Antoine, 74210 Giez (FR)
(74) Mandataire: Myon, Gérard Jean-Pierre

(56) Documents cités:
- EP-A- 0 375 581
- EP-A- 1 333 218
- EP-A- 1 422 462
- WO-A-2006/092503
- US-A- 5 806 832

## Description

La présente invention a trait à un élément femelle de raccord et à un raccord rapide, prévu pour la jonction amovible de deux canalisations parcourues par un fluide sous pression, comprenant un tel élément femelle.

WO-A-2006/092503 décrit un raccord rapide comprenant un élément femelle et un élément mâle, raccordés respectivement à une canalisation amont et à une canalisation aval et propres à s'emmancher axialement l'un dans l'autre. L'emmanchement relatif des éléments mâle et femelle provoque l'ouverture d'un clapet monté dans un corps de l'élément femelle, ce qui met en communication les canalisations amont et aval. L'élément femelle de ce raccord comprend un verrou, monté à coulissement dans le corps de l'élément femelle et chargé élastiquement vers une position de verrouillage de l'élément mâle en configuration emmanchée dans l'élément femelle. En vue de la dissociation des éléments de raccord, l'élément femelle comprend également un bouton de manoeuvre du coulissement du verrou à l'encontre de son chargement élastique, propre à déplacer le verrou vers une position de retenue transitoire de l'élément mâle dans l'élément femelle. Lorsque le verrou est dans sa position de retenue transitoire, le clapet de l'élément femelle obture le corps de l'élément femelle, alors que le fluide compris dans la canalisation aval s'écoule vers l'extérieur du raccord à travers des interstices que forment les jeux nécessaires au fonctionnement du raccord. Lorsque la pression interne du raccord atteint un seuil de sécurité, le verrou est repoussé automatiquement par son chargement élastique vers une position de libération de l'élément mâle par rapport à l'élément femelle. L'élément mâle est alors apte à être dissocié de l'élément femelle, sans coup de fouet.

Afin d'obtenir un passage sécurisé du verrou depuis sa position de retenue transitoire vers sa position de libération de l'élément mâle, la décompression à l'intérieur du raccord doit être progressive et contrôlée. Or, le raccord décrit dans WO-A-2006/092503 comporte des interstices d'écoulement du fluide de la canalisation aval vers l'extérieur du raccord dont la section n'est pas parfaitement maîtrisée. Ces interstices forment en effet les jeux de fonctionnement entre les pièces en coulissement relatif du raccord. Dès lors, l'obtention d'une section déterminée de ces interstices de jeu nécessiterait un dimensionnement précis des pièces du raccord, ce qui augmenterait considérablement le coût de fabrication d'un tel raccord.

C'est à ces inconvénients qu'entend plus particulièrement remédier l'invention en proposant un élément femelle de raccord propre à coopérer avec une partie mâle complémentaire et permettant une dissociation sécurisée de la partie mâle par rapport à l'élément femelle après une phase de purge, tout en présentant un coût de fabrication limité.

A cet effet, l'invention a pour objet un élément femelle de raccord rapide pour la jonction amovible de deux canalisations amont et aval parcourues par un fluide sous pression, cet élément femelle étant apte à recevoir une partie mâle en emmanchement selon un axe longitudinal, l'élément femelle comprenant un verrou mobile par rapport à un corps de l'élément femelle entre une première position dans laquelle il est apte à retenir la partie mâle dans une position de raccordement étanche avec un passage interne de l'élément femelle et une deuxième position dans laquelle il est apte à retenir la partie mâle dans une position de purge de la canalisation aval, l'élément femelle comprenant en outre un organe de commande du déplacement du verrou au moins vers la deuxième position, l'organe de commande étant monté à coulissement dans un alésage débouchant du corps de l'élément femelle, caractérisé en ce que l'élément femelle comprend un joint propre à obturer un interstice défini entre une face externe de l'organe de commande et une face interne de l'alésage.

Au sens de l'invention, on entend par alésage un logement de géométrie quelconque, pas forcément cylindrique.

Selon d'autres caractéristiques avantageuses d'un élément femelle de raccord conforme à l'invention, prises isolément ou selon toutes les combinaisons techniquement possibles :
- le joint est propre à obturer l'interstice au moins en présence d'une surpression dans un passage de purge de la canalisation aval ;
- le joint est propre à obturer l'interstice uniquement en présence d'une surpression dans un passage de purge de la canalisation aval ;
- le joint est propre à être comprimé à la fois contre la face externe de l'organe de commande et contre la face interne de l'alésage uniquement en présence d'une surpression dans un passage de purge de la canalisation aval ;
- l'organe de commande comporte une gorge périphérique externe de réception du joint ;
- l'organe de commande comporte une partie d'actionnement de l'organe de commande, la gorge de réception du joint étant ménagée sur une face externe de la partie d'actionnement et s'étendant parallèlement à une arête d'intersection entre une surface externe du corps de l'élément femelle et l'alésage de coulissement de l'organe de commande ;
- chaque orifice du passage de purge qui est débouchant en présence d'une surpression dans le passage de purge débouche vers l'extérieur de l'élément femelle selon un axe sensiblement parallèle à l'axe longitudinal de l'élément femelle ;
- le verrou et l'organe de commande sont deux pièces distinctes ;
- le verrou est mobile en coulissement par rapport au corps de l'élément femelle entre la première position et la deuxième position, parallèlement à un axe transversal par rapport à l'axe longitudinal de l'élément femelle ;
- l'élément femelle comprend des moyens de rappel élastique du verrou vers la première position.

L'invention a également pour objet un raccord rapide pour la jonction amovible de deux canalisations parcourues par un fluide sous pression, ce raccord comprenant un élément femelle et un élément mâle propres à être raccordés l'un avec l'autre, l'élément femelle étant tel que décrit ci-dessus.

Les caractéristiques et avantages de l'invention apparaîtront dans la description qui va suivre de deux modes de réalisation d'un élément femelle et d'un raccord rapide conformes à l'invention, donnée uniquement à titre d'exemple et faite en se référant aux dessins annexés dans lesquels :
- la figure 1 est une coupe axiale schématique d'un raccord rapide conforme à un premier mode de réalisation de l'invention, en configuration emmanchée de ses éléments mâle et femelle ;
- la figure 2 est une coupe analogue à la figure 1, lors d'une première étape de purge du raccord ;
- la figure 3 est une coupe analogue à la figure 1, lors d'une deuxième étape de purge du raccord ;
- la figure 4 est une vue à plus grande échelle selon la flèche IV de la figure 1 d'un organe de commande appartenant au raccord des figures 1 à 3 ;
- la figure 5 est une vue de côté de l'organe de la figure 4, dans le sens de la flèche V de la figure 4 ;

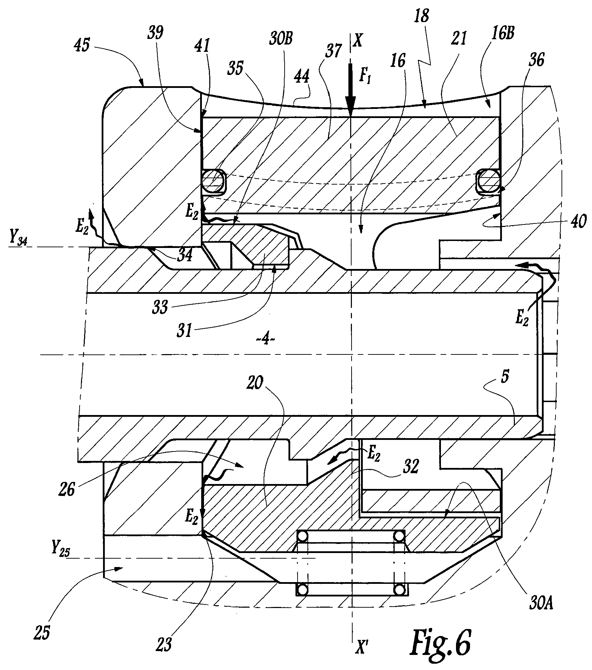

- la figure 6 est une vue à plus grande échelle du détail VI de la figure 2 ; et
- la figure 7 est une coupe analogue à la figure 2 pour un raccord conforme à un deuxième mode de réalisation de l'invention.

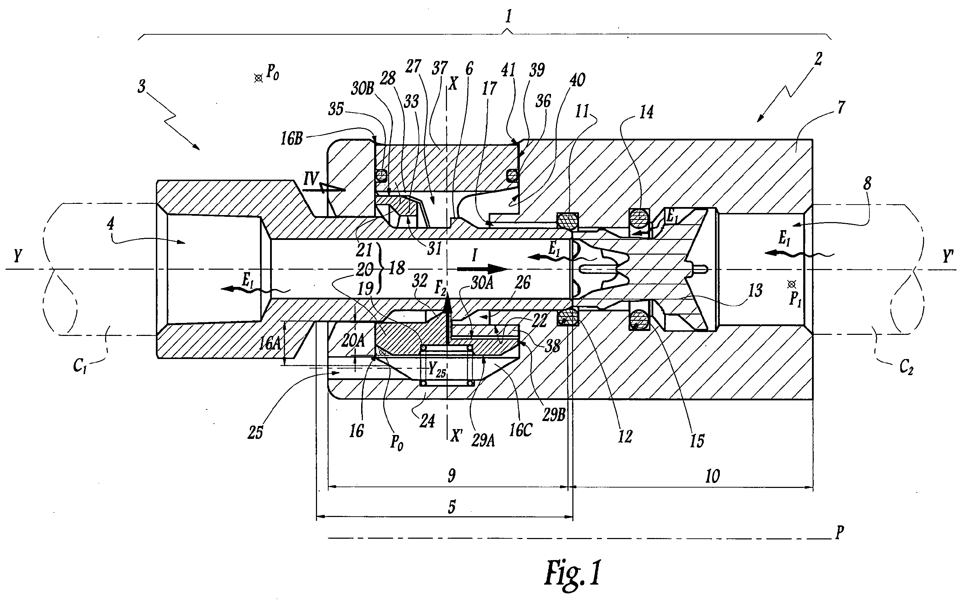

Le raccord rapide 1 représenté sur les figures 1 à 3 est destiné à raccorder deux canalisations Ci et C₂ parcourues par un fluide sous pression. Dans le présent texte et dans les revendications annexées, les termes « amont » et « aval », ainsi que les termes analogues, se réfèrent au sens d'écoulement du fluide sous pression dans le raccord 1, ce sens d'écoulement étant symbolisé par les flèches E₁ de la figure 1.

Le raccord 1 comprend un élément femelle 2 et une partie mâle complémentaire, qui est constituée par un élément mâle 3 dans ce premier mode de réalisation. Les éléments 2 et 3 sont prévus pour s'emmancher l'un dans l'autre dans la direction d'un axe Y-Y', qui est un axe longitudinal commun aux éléments 2 et 3.

Au sens de l'invention, une partie proximale de l'un des éléments 2 ou 3 est une partie tournée vers ou proche de la canalisation C₁ ou C₂ raccordée sur cet élément, alors qu'une partie distale est une partie tournée vers ou proche de l'autre élément lorsque ces éléments sont en regard l'un de l'autre, prêts à être emmanchés.

Un passage axial 4 pour le fluide sous pression traverse de part en part l'élément mâle 3 et débouche aux deux extrémités de celui-ci. Des moyens de raccordement d'une extrémité de ce passage 4 à la canalisation C₁, qui est en aval du raccord 1 et qui est schématisée en traits mixtes, peuvent être de tout type approprié et, par exemple, comprendre un collier de serrage non représenté dans un souci de clarté. A l'opposé de la canalisation C₁, l'élément mâle 3 comporte une portion d'extrémité en forme de fiche 5. Au niveau de cette dernière et à distance de son bord libre, l'élément mâle 3 est pourvu d'une collerette annulaire 6.

L'élément femelle 2 comprend un corps 7 qu'un trou axial 8 centré sur l'axe Y-Y' traverse de part en part. Une portion de ce trou 8 est complémentaire de la fiche 5 et forme un logement 9 pour l'emmanchement de cette fiche 5. Une autre portion du trou 8 prolonge ce logement 9 et forme un passage 10 pour le fluide sous pression. Des moyens de raccordement de l'embouchure du passage 10 à la canalisation C₂, qui est en amont du raccord 1 et qui est schématisée en traits mixtes, peuvent être de tout type approprié et, par exemple, comprendre un collier de serrage non représenté dans un souci de clarté. A la jonction du logement 9 et du passage 10, un joint annulaire 11 destiné à assurer l'étanchéité du raccordement des passages 4 et 10 est monté dans une gorge annulaire 12.

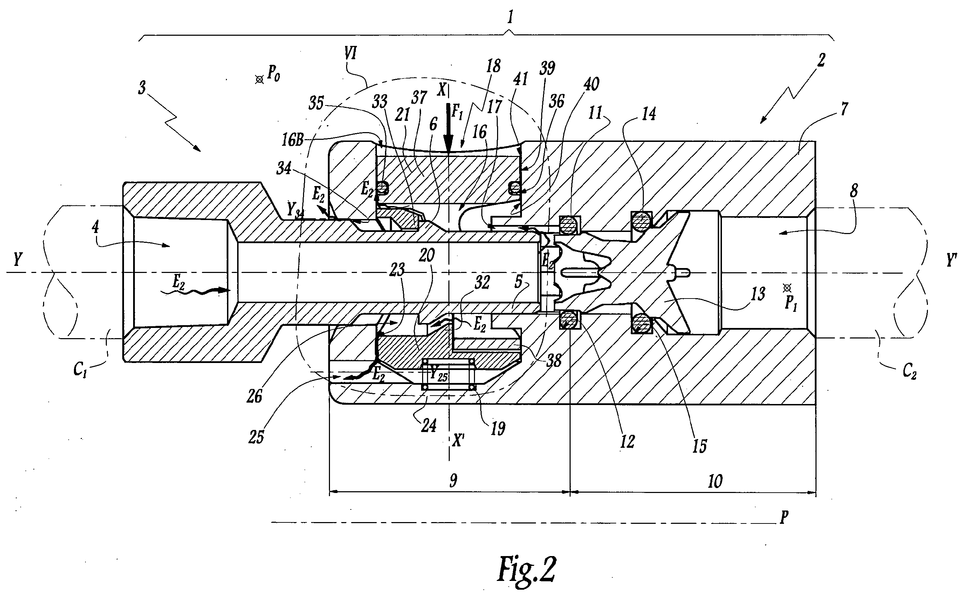

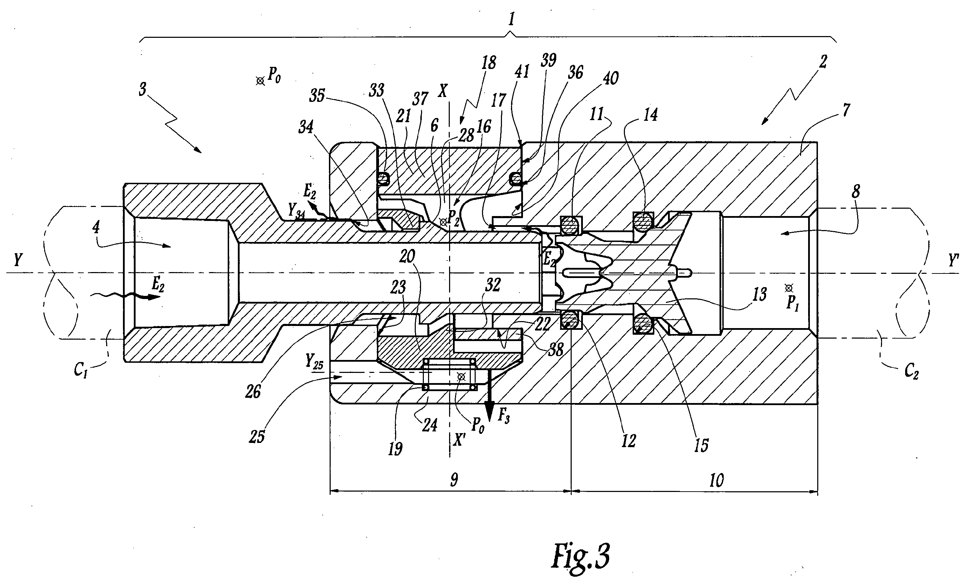

Une soupape 13 d'obturation du passage 10 est montée à coulissement dans ce dernier d'une manière connue en soi. Elle est mobile entre une position ouverte et une position fermée, la position fermée étant celle illustrée sur les figures 2 et 3, dans laquelle la soupape 13 dépasse dans le logement 9 et obture le passage 10 en étant appliquée contre un joint annulaire d'étanchéité 14 monté dans une gorge annulaire 15. Dans sa position ouverte illustrée sur la figure 1, la soupape 13 est à l'écart du joint 14.

Un trou 16 transversal par rapport à l'axe Y-Y' est ménagé dans le corps femelle 7 de manière à couper le logement 9. Plusieurs gorges axiales 17, au nombre de trois dans l'exemple représenté, s'étendent à partir de ce trou 16, en direction du passage 10, et s'arrêtent au niveau du joint 11.

Un mécanisme 18 de verrouillage de la fiche 5 de l'élément mâle 3 dans le logement 9 équipe le corps femelle 7. Il est monté dans le trou 16 et comporte un ressort 19, un verrou 20 et un organe 21 de commande de ce verrou 20. L'organe de commande est plus précisément un bouton 21 de poussée du verrou 20 à l'encontre de l'effort du ressort 19, dans le sens indiqué par la flèche F₁ de la figure 2, qui schématise une poussée manuelle. Le bouton 21 est monté dans le débouché 16B du trou 16, qui forme un alésage de coulissement du bouton 21 par rapport au corps 7 parallèlement à un axe X-X' du trou 16. Le bouton 21 est ainsi propre à être actionné manuellement vers l'intérieur du corps 7, depuis l'extérieur de ce corps 7.

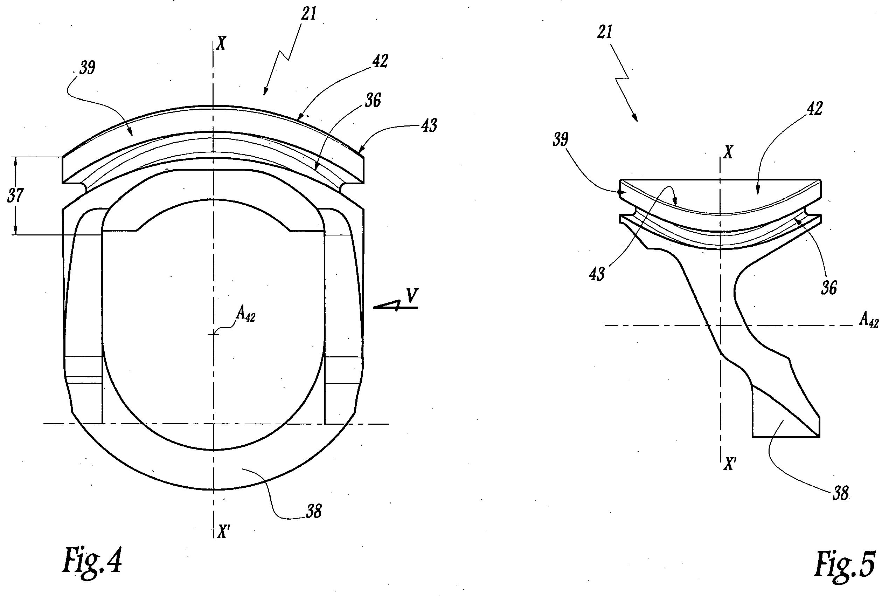

Comme montré sur les figures 4 et 5, le bouton 21 comporte une tête 37 d'actionnement du bouton 21 par un opérateur, la tête 37 étant à section transversale cylindrique, perpendiculairement à l'axe X-X' de la figure 2. Cette tête 37 est prévue pour coulisser dans l'alésage 16B. Le bouton 21 comporte également une portion d'extrémité 38, opposée à la tête 37, qui est propre à venir en regard d'un épaulement 22 interne du corps femelle 7 lorsque la tête 37 est reçue dans l'alésage 16B. L'épaulement 22 forme ainsi une butée de retenue du bouton 21 dans le corps 7.

On note 42 la surface de la tête 37 opposée à la portion 38. Cette surface 42 constitue la face externe de manoeuvre du bouton 21. La face 42 est en forme de portion de cylindre centrée sur un axe A₄₂ qui est parallèle à l'axe Y-Y' en configuration montée du bouton 21. On note par ailleurs 39 la face radiale externe de la tête 37, qui est cylindrique et centrée sur l'axe X-X' en configuration montée du bouton 21.

On note 43 l'arête de raccordement entre les faces 39 et 42. Cette arête 43 est globalement en forme de « selle de cheval », compte tenu de la géométrie respective des surfaces 39 et 42.

La tête 37 du bouton 21 est pourvue, sur sa face radiale externe 39, d'une gorge 36 périphérique externe qui s'étend, en configuration montée du bouton 21, parallèlement à une arête 44 d'intersection entre la surface externe 45 cylindrique du corps femelle 7 et le trou 16. La gorge 36 est située, par rapport au logement 9, du côté de la tête 37 du bouton 21 et du débouché 16B du trou 16. Dans la mesure où la face 42 du bouton 21 est cylindrique et globalement parallèle à la surface externe 45 du corps femelle 7, la gorge 36 s'étend également globalement parallèlement à l'arête 43. La gorge 36 présente ainsi une forme de vague. Cette géométrie de la gorge 36 permet de limiter l'encombrement du bouton 21 et du corps femelle 7. La gorge 36 a une forme courbe à la fois dans le plan de la figure 4 et dans le plan de la figure 5, avec une concavité tournée vers le bas de la figure 4 et une concavité tournée vers le haut, c'est-à-dire à l'inverse, de la figure 5.

La gorge 36 est propre à recevoir un joint torique 35, qui est destiné à être au contact d'une face interne 40 de l'alésage 16B en configuration montée du bouton 21 dans le trou 16.

Dans sa configuration de repos, qui correspond à des pressions égales de part et d'autre du joint 35, le joint 35 n'obture pas de manière étanche un interstice 41 formé entre la face externe 39 de la tête 37 et la face interne 40 de l'alésage 16B, c'est-à-dire n'est pas comprimé entre une surface de la gorge 36 et la face 40 de l'alésage 16B.

Comme le bouton 21, le verrou 20 est monté à coulissement dans le trou 16, si bien qu'il est mobile parallèlement à l'axe X-X' du trou 16, c'est-à-dire de manière sensiblement transversale à l'axe Y-Y' du logement 9 et du passage 10.

Le ressort 19 remplit la fonction d'un organe élastique de rappel du verrou 20 en direction du débouché 16B, vers une position dans laquelle le verrou 20 est apte à retenir la fiche mâle 5 dans une position de raccordement étanche avec le passage 10 de l'élément femelle 2, c'est-à-dire dans la direction schématisée par la flèche F₂ de la figure 1. A cet effet, il est comprimé entre le verrou 20 et un fond 24 qui limite le trou 16 à l'opposé du bouton 21. On note 16A la portion du trou 16 dans laquelle coulisse une portion 20A du verrou 20 opposée à la tête 37 du bouton 21. Le volume 16C délimité entre le fond 24 et la portion 20A du verrou 20 communique avec l'extérieur de l'élément femelle 2 par un canal 25 centré sur un axe Y₂₅ sensiblement parallèle à l'axe longitudinal Y-Y'. Le volume 16C est donc toujours à la pression externe P₀.

Les figures 1 à 3 sont schématiques notamment en ce que, dans un souci de clarté, le corps femelle 7 y est représenté comme étant d'un seul tenant alors que, en réalité, il résulte de l'assemblage de plusieurs pièces qui sont dissociées lors de l'installation du verrou 20, du bouton 21 et de la soupape 13.

Un passage 26 pour la fiche 5 est percé dans le verrou 20 et relie deux portions du logement 9. L'une de ces deux portions est plus profonde et moins large que l'autre. Sa paroi est à même de guider l'extrémité distale de la fiche 5 et délimite les gorges axiales 17. Une extrémité du trou 16 est fermée non hermétiquement par le bouton 21, mais pas par le verrou 20 du fait d'un passage 27 ménagé dans ce verrou 20. A son autre extrémité, le trou 16 est, en revanche, fermé non hermétiquement par le verrou 20. Le verrou 20 et le bouton 21, qui sont deux pièces distinctes l'une de l'autre, délimitent avec la paroi du trou 16 une chambre de volume variable 28, que les passages 26 et 27 mettent en communication avec le logement 9.

La surface totale du verrou 20 peut être divisée en quatre types de surface. Le premier type de surface n'est pas au contact du fluide présent dans le logement 9. De plus, ne coulissant pas sur la paroi du trou 16, il n'assure pas un guidage du verrou 20. Dans l'exemple représenté, seule la surface d'extrémité 29A, qui est en regard du fond 24, est du premier type. La surface du deuxième type, unique et percée du passage 26 dans l'exemple représenté, est référencée 29B. Il s'agit de la surface qui guide le verrou 20 lors de son coulissement dans le trou 16, en glissant sur la paroi de ce trou. Les troisième et quatrième types de surface sont au contact du fluide présent dans le logement 9 et se distinguent l'un de l'autre par leur orientation. Plus précisément, le troisième type de surface est globalement tourné dans la direction de la flèche F₂, c'est-à-dire vers le débouché 16B et le bouton 21, alors que le quatrième type de surface est tourné à l'opposé, c'est-à-dire vers le fond 24. Dans l'exemple représenté, il y a deux surfaces du troisième type. Ces deux surfaces sont référencées 30A et 30B. La surface 30A délimite partiellement le passage 26, tandis que la surface 30B délimite partiellement la chambre de volume variable 28. Dans l'exemple représenté, seule une surface, référencée 31, est du quatrième type. Les projections de la surface 31 et de la surface 30B selon la direction de l'axe X-X', qui est la direction de coulissement du verrou 20, par exemple sur un plan P perpendiculaire à cette direction, ont la même aire. De ce fait, la projection des surfaces 30A et 30B parallèlement à l'axe X-X', sur le plan P, a une aire supérieure à la projection de la surface 31 parallèlement à ce même axe X-X', toujours sur le plan P.

Le verrou 20 est pourvu de deux dents ou saillies internes 32 et 33 de retenue de l'élément mâle 3 par sa collerette 6. Ces saillies 32 et 33 sont décalées l'une de l'autre selon l'axe Y-Y'. Chacune d'elles présente la forme d'un bourrelet s'étendant sur la moitié de la circonférence du passage 26. La saillie 32 est décalée dans le sens I d'introduction de la fiche 5 dans l'élément femelle 2, par rapport à la saillie 33. Par rapport à l'axe Y-Y', elle est du même côté que le ressort 19, alors que la saillie 33 est du même côté que la tête 37 du bouton 21.

Dans la configuration dissociée des éléments femelle 2 et mâle 3, non représentée sur les figures, la soupape 13 est propre à coulisser librement et la pression du fluide dans la canalisation amont C₂ la place dans sa position aval d'obturation. De plus, le ressort 19 pousse le verrou 20 contre le bouton 21, de sorte que la portion d'extrémité 38 du bouton 21 est appliquée contre l'épaulement 22. L'assemblage des éléments 2 et 3 est réalisé en enfonçant la fiche 5 dans le logement 9 selon la direction de l'axe Y-Y'. Lors de cette opération, la collerette 6 s'encliquette derrière la saillie 32. A la fin de l'introduction de la fiche 5, cette dernière pousse la soupape 13 vers l'amont, jusque dans sa position ouverte, comme montré sur la figure 1.

Sur la figure 1, le raccord 1 assure la jonction des canalisations C₁ et C₂. La fiche 5, que la saillie 32 retient par sa collerette 6 dans le logement 9, maintient la soupape 13 dans sa position ouverte, à l'encontre de la pression P₁ du fluide dans la canalisation amont C₂. De plus, le joint 11 assure l'étanchéité du raccordement des passages 4 et 10, tout en isolant hermétiquement le logement 9 de ces passages 4 et 10. Le verrou 20 est alors dans une position de retenue de l'élément mâle 3 dans une position de raccordement étanche avec le passage 10 de l'élément femelle 2.

Pour dissocier l'élément mâle 3 de l'élément femelle 2, on exerce une poussée F₁ sur le bouton 21 de manière à déplacer le verrou 20 vers le fond 24 à l'encontre du ressort 19, suffisamment pour que la collerette 6 puisse franchir la saillie 32 et que la pression du fluide dans le raccord 1 puisse faire coulisser la fiche 5 par rapport au corps 7 de l'élément femelle, vers l'extérieur. La poussée du bouton 21 par un opérateur qui agit sur la tête 37 du bouton est aisée car le joint 35 n'est pas comprimé entre une surface de la gorge 36 et la face interne 40 de l'alésage 16B, de sorte que les frottements exercés par le joint 35 entre le bouton 21 et l'alésage 16B sont faibles. Suite à cela, le raccord 1 est dans la configuration illustrée sur la figure 2, dans laquelle le verrou 20 est dans une position de retenue de l'élément mâle 3 dans une position de purge du fluide compris dans la canalisation aval C₁.

Plus précisément, comme montré sur la figure 2, dans la position de purge de l'élément mâle 3 par rapport à l'élément femelle 2, la saillie 33 empêche l'éjection de la fiche 5 hors du corps 7 en retenant cette fiche 5 par sa collerette 6. La fiche 5 est enfoncée dans le corps 7 à une moindre profondeur qu'à la figure 1, de telle manière que la soupape 13 peut obturer le passage 10 et que les gorges axiales 17 mettent en communication le passage 4 avec le passage 26. Dans sa position de purge, l'élément mâle 3 définit avec l'élément femelle 2 un passage de purge du fluide compris dans la canalisation aval C₁. Ce fluide s'échappe en passant par le passage 4, puis par les gorges 17 et par le passage 26. Le fluide passe alors dans la chambre 28 et dans l'interstice 41 défini entre la face externe 39 de la tête 37 du bouton 21 et la face interne 40 de l'alésage 16B, ainsi que dans un interstice 34 défini entre la paroi de la portion la moins profonde du logement 9 et la fiche 5 et dans un interstice 23 défini entre la portion 20A du verrou 20 et la portion 16A du trou 16, ce qu'illustrent les flèches E₂ de la figure 2. En particulier, la section de l'interstice 41 peut être supérieure à la section des interstices 23 et 34. L'interstice 34 est dirigé selon un axe Y₃₄ sensiblement parallèle à l'axe longitudinal Y-Y'. La pression du fluide en cours d'échappement sollicite le joint 35, reçu dans la gorge 36 de la tête 37, en compression contre le bord de la gorge 36 le plus extérieur par rapport au corps 7, c'est-à-dire le plus éloigné du fond 24, et contre la paroi interne 40 de l'alésage 16B, de sorte que le joint 35 obture de manière étanche l'interstice 41 délimité entre l'alésage 16B et la tête 37 du bouton 21. Ainsi, durant la purge, c'est-à-dire en présence d'une surpression P₂ dans le passage de purge, le joint 35 obture de manière étanche l'interstice 41. La chambre 28 est ainsi rendue plus étanche et, du fait de l'étroitesse relative des interstices 23 et 34, la perte de charge au niveau de ces interstices 23 et 34 est importante. C'est pourquoi, durant la purge E₂, il règne une surpression P₂ dans le logement 9, dans le passage 26 et dans la chambre 28, c'est-à-dire une pression P₂ sensiblement supérieure à la pression externe P₀. La portion 20A du verrou 20 sépare la zone soumise à la surpression P₂ de la zone à la pression externe P₀.

Sur la figure 3, la purge E₂ de la canalisation aval C₁ se poursuit sans éjection de l'élément mâle 3 hors de l'élément femelle 2, alors qu'on a cessé d'appuyer sur le bouton 21. Cela résulte de la surpression P₂ dans le logement 9 et dans la chambre 28, par rapport à l'extérieur du raccord 1. Cette surpression P₂ s'exerce sur les surfaces 30A, 30B et 31 du verrou 20 et produit sur ce verrou un effort F₃ parallèle à l'axe X-X', opposé au rappel exercé par le ressort 19 dans la direction F₂, cet effort F₃ rappelant le verrou 20 dans une position de retenue de l'élément mâle 2 en position de purge et résultant de ce que la somme des aires des projections des surfaces 30A et 30B, parallèlement à l'axe X-X' et sur le plan P, a une aire supérieure à l'aire de la projection de la surface 31 parallèlement à cet axe X-X', toujours sur le plan P.

En d'autres termes, la poussée résultant de l'application de la surpression P₂ sur les surfaces 30B et 31 est nulle, si bien que le verrou 20 est seulement soumis à la poussée résultant de l'application de cette surpression P₂ sur la surface 30A, c'est-à-dire sur la portion 20A du verrou 20, à la poussée résultant de l'application de la pression externe P₀ sur la surface 29A, c'est-à-dire sur cette même portion 20A, et à celle exercée par le ressort 19. Or, ce ressort 19 est taré de manière à ne pouvoir rappeler le verrou 20 dans la direction de la flèche F₂ qu'une fois que la surpression P₂ dans le logement 9 et la chambre 28 est passée en dessous d'un seuil prédéterminé en deçà duquel cette surpression ne peut plus conduire à une éjection violente et dangereuse de l'élément 3. Le rappel du verrou 20 dans la direction F₂ libère la fiche 5 par rapport à la dent 33, l'élément mâle 3 pouvant alors être retiré de l'élément femelle 2. Le personnel et le matériel se trouvant dans le voisinage du raccord 1 sont ainsi protégés.

De manière particulièrement avantageuse, la dissociation des éléments 2 et 3 du raccord 1 ne requiert qu'une seule pression manuelle, exercée sur le bouton 21 de commande du déplacement du verrou 20 de la position de retenue de l'élément mâle 3 dans une position de raccordement étanche avec le passage 10 de l'élément femelle 2 vers la position de retenue de l'élément mâle 3 dans une position de purge de la canalisation aval C₁.

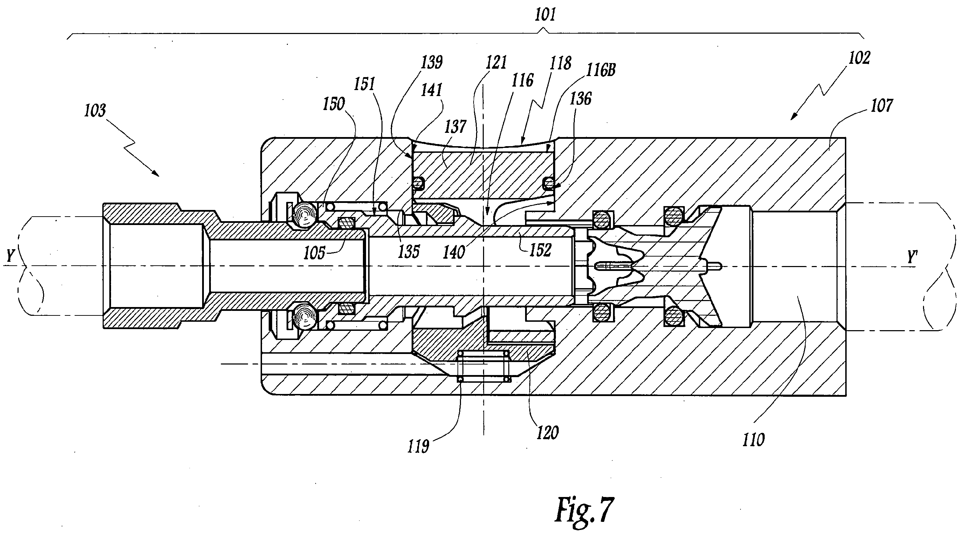

Sur la figure 7, qui est schématique comme les figures 1 à 3, est représenté un raccord 101 selon un deuxième mode de réalisation de l'invention. Dans ce qui suit, on décrit plus particulièrement ce qui distingue ce raccord 101 du raccord 1. En outre, une référence utilisée ci-après pour désigner une partie du raccord 101 analogue ou équivalente à une partie référencée du raccord 1 est construite en augmentant de 100 la référence repérant cette partie sur le raccord 1.

Le raccord 101 conforme à ce deuxième mode de réalisation comprend un élément mâle 103 et un élément femelle 102 dont le corps 107 est équipé d'un adaptateur 150 ayant la même fonction que l'adaptateur décrit dans la demande de brevet EP 1 422 462. A son extrémité distale, cet adaptateur 150 comporte des moyens femelles 151 de réception et de raccordement de la fiche mâle 105 de l'élément mâle 103, tandis qu'il définit une fiche mâle 152 à son autre extrémité. Il s'agit donc d'un élément de raccordement à la fois mâle et femelle.

Le corps femelle 107 est également équipé d'un mécanisme de verrouillage 118, monté dans un trou 116 du corps 107 transversal par rapport à l'axe longitudinal Y-Y' de l'élément femelle 102. Le mécanisme 118 est analogue au mécanisme 18 du premier mode de réalisation et comporte un ressort 119, un verrou 120 et un bouton 121 de commande du verrou 120. Le verrou 120 est semblable au verrou 20 du premier mode de réalisation et sert à verrouiller la fiche 152 de l'adaptateur 150, avec lequel l'élément mâle 103 a été préalablement verrouillé de manière étanche, à deux profondeurs différentes. Le verrou 120 est ainsi mobile entre deux positions, l'une dans laquelle il retient l'adaptateur 150 dans une position de raccordement étanche avec un passage interne 110 de l'élément femelle 102, la deuxième dans laquelle il retient l'adaptateur 150 dans une position de purge de la canalisation aval C₁. De même, le bouton 121 est semblable au bouton 21 décrit précédemment. En particulier, une tête 137 du bouton 121 est montée dans un débouché 116B du trou 116, qui forme un alésage de coulissement de la tête 137 par rapport au corps 107 parallèlement à l'axe du trou 116, de sorte que le bouton 121 est propre à être actionné manuellement vers l'intérieur du corps 107, depuis l'extérieur de ce corps. La tête 137 du bouton 121 est pourvue d'une gorge 136 périphérique externe de réception d'un joint torique 135 destiné à être au contact d'une face interne 140 de l'alésage 116B, en configuration montée du bouton 121 dans le trou 116. Dans sa configuration de repos, le joint 135 n'obture pas de manière étanche un interstice 141 formé entre une face externe 139 de la tête 137 et la face interne 140 de l'alésage 116B. Le fonctionnement du raccord 101 de ce deuxième mode de réalisation est analogue au fonctionnement du raccord 1 du premier mode de réalisation. Après purge, l'adaptateur est libéré par rapport au verrou 120 et repoussé vers une position de libération de l'élément mâle.

Comme il ressort des deux modes de réalisation décrits précédemment, un élément femelle de raccord et un raccord conformes à l'invention permettent une dissociation sécurisée d'une partie mâle, à savoir respectivement l'élément mâle 3 dans le premier mode de réalisation et la partie mâle 152 de l'adaptateur 150 dans le deuxième mode de réalisation, par rapport à l'élément femelle après une phase de purge du fluide compris dans la canalisation aval. En effet, la fiabilité de la décompression à l'intérieur d'un raccord selon l'invention est améliorée par rapport aux raccords de l'état de la technique, ce qui garantit un passage sécurisé du verrou depuis sa position de retenue transitoire vers sa position de libération de la partie mâle.

La fiabilité accrue de la décompression provient tout d'abord d'une bonne maîtrise de la section des interstices d'écoulement du fluide de la canalisation aval vers l'extérieur du raccord, grâce à un dimensionnement précis, facilement réalisable, de l'interstice 34 de l'embouchure du corps femelle et de l'interstice 23 entre la portion de verrou 20A et la portion 16A du trou 16, et à l'obturation étanche par le joint 35, 135 de l'interstice 41, 141 de jeu entre l'organe de commande 21, 121 et son alésage de coulissement 16B, 116B.

L'étanchéité améliorée de la chambre interne 28 du raccord en configuration de purge, du fait de la présence du joint 35, 135, permet également d'améliorer la mise sous pression de cette chambre interne, ce qui participe à la fiabilité accrue du maintien du verrou dans sa position de retenue de la partie mâle dans la position de purge, à l'encontre de l'action élastique du ressort 19, 119.

En outre, la présence du joint 35, 135 à l'interface entre l'organe de commande 21, 121 et l'alésage 16B, 116B assure une protection de l'intérieur de l'élément femelle contre des poussières ou de l'humidité susceptibles de pénétrer à travers l'interstice 41, 141. Il en résulte un coulissement fiable de l'organe de commande 21, 121 dans l'alésage 16B, 116B, ainsi que du verrou 20, 120 entre ses positions de purge et de libération de la partie mâle, car les frottements intervenant entre le verrou 20, 120 et la partie mâle 3, 152 sont bien maîtrisés.

Par ailleurs, grâce à l'obturation étanche de l'interstice 41, 141 par le joint 35, 135, il n'est pas nécessaire de prévoir un dimensionnement relatif précis de l'organe de commande 21, 121 et de l'alésage 16B, 116B. Ainsi, la fabrication des pièces de l'élément femelle d'un raccord selon l'invention est facilitée et cet élément peut présenter un coût de fabrication limité. En particulier, l'organe de commande 21, 121 peut être fabriqué de manière économique par moulage d'un matériau synthétique.

Un élément femelle de raccord et un raccord conformes à l'invention permettent également d'améliorer l'ergonomie du raccord par rapport aux raccords de l'état de la technique. En effet, grâce à la maîtrise des paramètres de décompression à l'intérieur du raccord, il est possible de dimensionner de manière très précise l'effort de rappel exercé par le ressort 19, 119. De plus, lors de la phase de purge, le fluide est canalisé dans des passages à fortes pertes de charge, en particulier les interstices 23 et 34, de sorte que la pression du fluide qui s'échappe vers l'extérieur est fortement diminuée, ce qui garantit la sécurité d'un opérateur. Cet effet est renforcé par le fait que les orifices d'échappement en présence d'une surpression dans le passage de purge d'un raccord selon l'invention débouchent vers l'extérieur de l'élément femelle, axialement sur la face de l'embouchure de l'élément femelle, les flux de fluide en cours d'échappement étant ainsi ressentis plus faiblement par un opérateur, au niveau de sa main en place autour de l'élément femelle pour agir sur l'organe de commande 21, 121. En outre, comme le joint 35, 135 est comprimé uniquement pendant la phase de purge, entre la face externe de la tête de l'organe de commande 21, 121 et la face interne de l'alésage de coulissement 16B, 116B, le frottement résistant exercé par le joint 35, 135 à l'encontre de l'effort d'actionnement exercé par un opérateur sur la tête de l'organe de commande est faible. De manière avantageuse, l'encombrement radial de l'organe de commande 21, 121 et de l'élément femelle 2, 102 n'est pas augmenté par la présence du joint 35, 135 car la gorge 36, 136 de réception du joint 35, 135 suit la géométrie externe de la tête de l'organe de commande.

L'invention n'est pas limitée aux exemples décrits et représentés. En particulier, le joint 35, 135 destiné à être au contact de la face externe de l'organe de commande 21,.121 et de la face interne de l'alésage 16B, 116B d'un élément femelle de raccord selon l'invention peut être monté dans une gorge périphérique interne de l'alésage 16B, 116B, ménagée sur la face interne 40, 140, au lieu d'une gorge périphérique externe de l'organe de commande 21, 121.

Ce joint 35, 135 peut en outre être prévu pour obturer en permanence l'interstice 41, 141 de manière étanche, quelle que soit la configuration du raccord.

Par ailleurs, un élément femelle de raccord conforme à l'invention peut comprendre un mécanisme de verrouillage à trois dents radiales, analogue à celui décrit dans la demande de brevet EP 1 333 218, un joint étant prévu au contact de la face externe d'une tête de l'organe de commande du mécanisme de verrouillage et de la face interne de l'alésage de coulissement de cet organe de commande, comme dans les exemples décrits précédemment.

Enfin, l'invention a été décrite avec un verrou 20, 120 et un organe de commande 21, 121 conçus comme deux pièces distinctes. En variante, le verrou et l'organe de commande d'un élément femelle de raccord selon l'invention peuvent être monoblocs, avec, à titre d'exemple, une construction et un mode de fonctionnement analogues à ceux du cinquième mode de réalisation de WO-A-2006/092503.

## Revendications

1. Elément femelle (2 ; 102) de raccord rapide (1 ; 101) pour la jonction amovible de deux canalisations amont et aval (C₁ , C₂) parcourues par un fluide sous pression, l'élément femelle (2 ; 102) étant apte à recevoir une partie mâle (3 ; 152) en emmanchement selon un axe longitudinal (Y-Y'), l'élément femelle (2 ; 102) comprenant un verrou (20 ; 120) mobile par rapport à un corps (7 ; 107) de l'élément femelle entre une première position dans laquelle il est apte à retenir la partie mâle (3 ; 152) dans une position de raccordement étanche avec un passage interne (10 ; 110) de l'élément femelle (2 ; 102) et une deuxième position dans laquelle il est apte à retenir la partie mâle (3 ; 152) dans une position de purge de la canalisation aval (C₁), l'élément femelle comprenant en outre un organe (21 ; 121) de commande du déplacement du verrou (20; 120) au moins vers la deuxième position, l'organe de commande (21 ; 121) étant monté à coulissement dans un alésage (16B ; 116B) débouchant du corps (7 ; 107) de l'élément femelle, **caractérisé en ce que** l'élément femelle (2 ; 102) comprend un joint (35 ; 135) propre à obturer un interstice (41 ; 141) défini entre une face externe (39 ; 139) de l'organe de commande (21 ; 121) et une face interne (40 ; 140) de l'alésage (16B ; 116B).

2. Elément femelle selon la revendication 1, **caractérisé en ce que** le joint (35 ; 135) est propre à obturer ledit interstice (41 ; 141) au moins en présence d'une surpression (P₂) dans un passage de purge (4, 17, 23, 26, 34) de la canalisation aval (C₁).

3. Elément femelle selon l'une quelconque des revendications 1 ou 2, **caractérisé en ce que** le joint (35 ; 135) est propre à obturer ledit interstice (41 ; 141) uniquement en présence d'une surpression (P₂) dans un passage de purge (4, 17, 23, 26, 34) de la canalisation aval (C₁).

4. Elément femelle selon l'une quelconque des revendications précédentes, **caractérisé en ce que** le joint (35 ; 135) est propre à être comprimé à la fois contre la face externe (39 ; 139) de l'organe de commande (21 ; 121) et contre la face interne (40; 140) de l'alésage (16B ; 116B) uniquement en présence d'une surpression (P₂) dans un passage de purge (4, 17, 23, 26, 34) de la canalisation aval (C₁).

5. Elément femelle selon l'une quelconque des revendications précédentes, **caractérisé en ce que**, l'organe de commande (21 ; 121) comporte une gorge (36 ; 136) périphérique externe de réception du joint (35 ; 135).

6. Elément femelle selon la revendication 5; **caractérisé en ce que** l'organe de commande (21 ; 121) comporte une partie (37 ;'137) d'actionnement de l'organe de commande, la gorge (36 ; 136) de réception du joint (35 ; 135) étant ménagée sur une face externe (39 ; 139) de la partie d'actionnement (37 ; 137) et s'étendant parallèlement à une arête (44) d'intersection entre une surface externe (45) du corps (7 ; 107) de l'élément femelle (2 ; 102) et l'alésage (16B ; 116B) de coulissement de l'organe de commande (21 ; 121).

7. Elément femelle selon l'une quelconque des revendications précédentes, **caractérisé en ce que** chaque orifice (23, 34) du passage de purge (4, 17, 23, 26, 34) qui est débouchant en présence d'une surpression (P₂) dans le passage de purge (4, 17, 23, 26, 34) débouche vers l'extérieur de l'élément femelle (2 ; 102) selon un axe (Y₂₅, Y₃₄) sensiblement parallèle à l'axe longitudinal (Y-Y') de l'élément femelle (2 ; 102).

8. Elément femelle selon l'une quelconque des revendications précédentes, **caractérisé en ce que** le verrou (20 ; 120) et l'organe de commande (21 ; 121) sont deux pièces distinctes.

9. Elément femelle selon l'une quelconque des revendications précédentes, **caractérisé en ce que** le verrou (20 ; 120) est mobile en coulissement par rapport au corps (7 ; 107) de l'élément femelle (2 ; 102), entre la première position et la deuxième position, parallèlement à un axe (X-X') transversal par rapport à l'axe longitudinal (Y-Y') de l'élément femelle.

10. Elément femelle selon l'une quelconque des revendications précédentes, **caractérisé en ce qu'**il comprend des moyens (19 ; 119) de rappel élastique (F₂) du verrou (20 ; 120) vers la première position.

11. Raccord rapide (1 ; 101) pour la jonction amovible de deux canalisations (C₁, C₂) parcourues par un fluide sous pression, ce raccord comprenant un élément femelle (2 ; 102) et un élément mâle (3 ; 103) propres à être raccordés l'un avec l'autre, **caractérisé en ce que** l'élément femelle (2 ; 102) est selon l'une quelconque des revendications précédentes.

## Patentansprüche

1. Buchsen-Element (2; 102) für eine Schnellkupplung (1; 101) zur lösbaren Verbindung zweier, einem stromaufwärtsseitigen und einem stromabwärtsseitigen, Rohre (C₁, C₂), die von einem unter Druck stehenden Fluid durchströmt sind, wobei das Buchsen-Element (2; 102) in der Lage ist, ein Steckerteil (3; 152) aufzunehmen durch Einsetzen entlang einer Längsachse (Y-Y'), wobei das Buchsen-Element (2; 102) einen Riegel (20; 120) aufweist, der bezüglich eines Körpers (7; 107) des Buchsen-Elements bewegbar ist zwischen einer ersten Position, in welcher er in der Lage ist, das Steckerteil (3; 152) zurückzuhalten in einer Position zu dichten Kupplung mit einer inneren Passage (10; 110) des Buchsen-Elements (2; 102), und einer zweiten Position, in welcher er in der Lage ist, das Steckerteil (3; 152) zurückzuhalten in einer Position zur Entleerung des stromabwärtsseitigen Rohrs (C₁), wobei das Buchsen-Element ferner ein Organ (21; 121) zur Steuerung der Verlagerung des Riegels (20; 120) zumindest zu der zweiten Position hin aufweist, wobei das Organ zur Steuerung (21; 121) montiert ist, um in einer Bohrung (16B, 116B) verschiebbar zu sein, die aus dem Körper (7; 107) des Buchsen-Elements ausmündet, **dadurch gekennzeichnet, dass** das Buchsen-Element (2; 102) eine Dichtung (35; 135) aufweist, die in der Lage ist, einen Zwischenraum (41; 141) zu verschließen, der definiert ist zwischen einer Außenfläche (39; 139) des Organs zur Steuerung (21; 121) und einer Innenfläche (40; 140) der Bohrung (16B; 116B).

2. Buchsen-Element gemäß Anspruch 1, **dadurch gekennzeichnet, dass** die Dichtung (35; 135) in der Lage ist, den besagten Zwischenraum (41; 141) wenigstens in Anwesenheit eines Überdrucks (P₂) in einer Entleerungspassage (4, 17, 23, 26, 34) des stromabwärtsseitigen Rohrs (C1) zu verschließen.

3. Buchsen-Element gemäß irgendeinem der Ansprüche 1 oder 2, **dadurch gekennzeichnet, dass** die Dichtung (35; 135) in der Lage ist, den besagten Zwischenraum (41; 141) einzig zu verschließen in Anwesenheit eines Überdrucks (P₂) in einer Entleerungspassage (4, 17, 23, 26, 34) des stromabwärtsseitigen Rohrs (C₁).

4. Buchsen-Element gemäß irgendeinem der vorhergehenden Ansprüche, **dadurch gekennzeichnet, dass** die Dichtung (35; 135) in der Lage ist, gleichzeitig gegen die Außenfläche (39; 139) des Organs zur Steuerung (21; 121) und gegen die Innenfläche (40; 140) der Bohrung (16B; 116B) komprimiert zu werden einzig in Anwesenheit eines Überdrucks (P₂) in einer Entleerungspassage (4, 17, 23, 26, 34) des stromabwärtsseitigen Rohrs (C₁).

5. Buchsen-Element gemäß irgendeinem der vorhergehenden Ansprüche, **dadurch gekennzeichnet, dass** das Organ zur Steuerung (21; 121) eine Außenumfangs-Rille (36; 136) zur Aufnahme der Dichtung (35; 135) aufweist.

6. Buchsen-Element gemäß Anspruch 5, **dadurch gekennzeichnet, dass** das Organ zur Steuerung (21; 121) einen Abschnitt (37; 137) zur Betätigung des Organs zur Steuerung (21; 121) aufweist, wobei die Rille (36; 136) zur Aufnahme der Dichtung (35; 135) an einer Außenfläche (39; 139) des Abschnitts zur Betätigung (37; 137) bereitgestellt ist und sich parallel zu einer Schnitt-Kante (44) zwischen einer Außenfläche (45) des Körpers (7; 107) des Buchsen-Elements (2; 102) und der Bohrung (16B; 116B) zur Verschiebung des Organs zur Steuerung (21; 121) erstreckt.

7. Buchsen-Element gemäß irgendeinem der vorhergehenden Ansprüche, **dadurch gekennzeichnet, dass** jede Öffnung (23, 34) der Entleerungspassage (4, 17, 23, 26, 34), die freikommt in Anwesenheit eines Überdrucks (P₂) in der Entleerungspassage (4, 17, 23, 26, 34), zu der Außenseite des Buchsen-Elements (2; 102) hin entlang einer Achse (Y₂₅, Y₃₄) ausmündet, die im Wesentlichen parallel zu der Längsachse (Y-Y') des Buchsen-Elements (2; 102) ist.

8. Buchsen-Element gemäß irgendeinem der vorhergehenden Ansprüche, **dadurch gekennzeichnet, dass** der Riegel (20; 120) und das Organ zur Steuerung (21; 121) zwei unterschiedliche Bauteile sind.

9. Buchsen-Element gemäß irgendeinem der vorhergehenden Ansprüche, **dadurch gekennzeichnet, dass** der Riegel (20; 120) verschiebebewegbar ist bezüglich des Körpers (7; 107) des Buchsen-Elements (2; 102) zwischen der ersten Position und der zweiten Position parallel zu einer Querachse (X-X') bezüglich der Längsachse (Y-Y') des Buchsen-Elements.

10. Buchsen-Element gemäß irgendeinem der vorhergehenden Ansprüche, **dadurch gekennzeichnet, dass** es Mittel (19; 119) zur elastischen Rückstellung (F₂) des Riegels (20; 120) zu der ersten Position hin aufweist.

11. Schnellkupplung (1; 101) für die lösbare Verbindung von zwei Rohren (C1, C2), die von einem unter Druck stehenden Fluid durchströmt sind, wobei diese Kupplung aufweist ein Buchsen-Element (2; 102) und ein Stecker-Element (3; 103), die in der Lage sind, miteinander verbunden zu werden, **dadurch gekennzeichnet, dass** das Buchsen-Element (2; 102) gemäß irgendeinem der vorhergehenden Ansprüche ist.

## Claims

1. A female element (2; 102) of a quick coupling (1; 101) for releasably joining together an upstream pipe and a downstream pipe (C₁, C₂) conveying a fluid under pressure, the female element (2; 102) being suitable for receiving a male portion (3; 152) engaged therein along a longitudinal axis (Y-Y'), the female element (2; 102) including a latch (20; 120) that is movable relative to a body (7; 107) of the female element between a first position in which it is capable of retaining the male portion (3; 152) in a position of leaktight coupling with an internal passage (10; 110) in the female element (2; 102) and a second position in which it is capable of retaining the male portion (3; 152) in a position for purging the downstream pipe (C₁), the female element also comprising a control member (21; 121) for controlling movement of the latch (20; 120), at least towards the second position, the control member (21; 121) being slidably mounted in a bore (16B; 116B) that opens to the outside of the body (7; 107) of the female element, wherein the female element (2; 102) includes a gasket (35; 135) suitable for closing a gap (41; 141) defined between an outer face (39; 139) of the control member (21; 121) and an inside face (40; 140) of the bore (16B; 116B).

2. A female element according to claim 1, wherein the gasket (35; 135) is capable of closing said gap (41; 141) at least in the presence of relative high pressure (P₂) in a passage (4, 17, 23, 26, 34) for purging the downstream pipe (C₁).

3. A female element according to any one of claims 1 or 2, wherein the gasket (35; 135) is capable of closing said gap (41; 141) solely in the presence of relative high pressure (P₂) in a passage (4, 17, 23, 26, 34) for purging the downstream pipe (C₁).

4. A female element according to any preceding claim, wherein the gasket (35; 135) is capable of being compressed both against the outer face (39; 139) of the control member (21; 121), and against the inside face (40; 140) of the bore (16B; 116B) solely in the presence of relative high pressure (P₂) in a passage (4, 17, 23, 26, 34) for purging the downstream pipe (C₁).

5. A female element according to any preceding claim, wherein the control member (21; 121) includes an outer peripheral groove (36; 136) for receiving the gasket (35; 135).

6. A female element according to claim 5, wherein the control member (21; 121) includes a portion (37; 137) for actuating the control member, the groove (36; 136) for receiving the gasket (35; 135) being formed in an outer face (39; 139) of the actuator portion (37; 137) and extending parallel to an edge (44) at the intersection between an outside surface (45) of the body (7; 107) of the female element (2; 102) and the bore (16B; 116B) in which the control member (21; 121) slides.

7. A female element according to any preceding claim, wherein each orifice (23, 24) of the purging passage (4, 17, 23, 26, 34) that opens out in the presence of relative high pressure (P₂) in the purging passage (4, 17, 23, 26, 34) opens to the outside of the female element (2; 102) along an axis (Y₂₅, Y₃₄) that is substantially parallel to the longitudinal axis (Y-Y') of the female element (2; 102).

8. A female element according to any preceding claim, wherein the latch (20; 120) and the control member (21; 121) are two distinct parts.

9. A female element according to any preceding claim, wherein the latch (20; 120) is slidably movable relative to the body (7; 107) of the female element (2; 102), between the first and second positions, parallel to an axis (X-X') extending transversely relative to the longitudinal axis (Y-Y') of the female element.

10. A female element according to any preceding claim, wherein it includes means (19; 119) for resiliently returning (F₂) the latch (20; 120) towards the first position.

11. A quick coupling (1; 101) for releasably joining together two pipes (C₁, C₂) conveying a fluid under pressure, said coupling comprising a female element (2; 102) and a male element (3; 103) suitable for being coupled together, wherein the female element (2; 102) is in accordance with any preceding claim.
